# EUROPEAN PATENT APPLICATION

(11) **EP 4 787 392 A1**
(43) Date of publication of application: **05.08.2026**
(21) Application number: 24872047.6
(22) Date of filing: 19.09.2024
(51) Int. Cl.: H01B 1/06, C01B 25/10, C01B 33/08, C01F 7/54, H01M 4/62, H01M 10/054, H01M 10/0562

(54) **SOLID ELECTROLYTE, METHOD FOR MANUFACTURING SOLID ELECTROLYTE, AND BATTERY**

(30) Priority: 29.09.2023 WO PCT/JP2023/035747; 28.05.2024 JP 2024086422
(71) Applicant: NGK Insulators, Ltd., Nagoya-shi, Aichi 467-8530 (JP); Nagoya Institute Of Technology, Nagoya-shi, Aichi 466-8555 (JP)
(72) Inventor: YAGI, En, Nagoya-shi, Aichi 467-8530 (JP); NISHIZAKI, Tsutomu, Nagoya-shi, Aichi 467-8530 (JP); TAKAHASHI, Haruto, Nagoya-shi, Aichi 467-8530 (JP); OYA, Masahiro, Nagoya-shi, Aichi 467-8530 (JP); YOSHIDA, Toshihiro, Nagoya-shi, Aichi 467-8530 (JP); MIYAZAKI, Reona, Nagoya-Shi, Aichi 466-8555 (JP)
(74) Representative: Mewburn Ellis LLP
(86) International application number: PCT/JP2024/033527
(87) International publication number: WO 2025/070256

(57) **Abstract**

A solid electrolyte contains Na, Mα, Mβ, and F, where Mα is at least one element serving as a trivalent cation, and Mβ is at least one element serving as a quadrivalent or higher-valent cation. Accordingly, it is possible to provide the solid electrolyte with high ion conductivity. Preferably, Mβ is an element serving as a quadrivalent cation, and the solid electrolyte contains a component expressed by a composition formula of Na₃₋ₓMα₁₋ₓMβₓF₆, where 0 < x < 1 is satisfied.

## Description

### TECHNICAL FIELD

The present invention relates to a solid electrolyte and a battery.

### CROSS-REFERENCE TO RELATED APPLICATIONS

This application claims priority benefit of International Patent Application No. PCT/JP2023/35747 filed on September 29, 2023 and Japanese Patent Application No. JP2024-86422 filed in the Japan Patent Office on May 28, 2024, the entire disclosures of which are incorporated herein by reference.

### BACKGROUND ART

In recent years, with the development of portable equipment such as personal computers and mobile phones, demand for batteries serving as power sources of such portable equipment is increasing considerably. The batteries used for such purposes conventionally use organic electrolyte solutions that contain electrolytes dissolving in inflammable organic solvents, as media for transporting ions. The batteries containing the organic electrolyte solutions may cause safety concerns. In view of this, all-solid-state batteries that use solid electrolytes instead of organic electrolyte solutions are under development in order to ensure intrinsic safety. Since the electrolytes are incombustible materials, all-solid-state batteries achieve a high level of safety.

Meanwhile, demand for large-scale lithium-ion batteries that realize electric vehicles (EVs) capable of decarbonization and a stable supply of renewable energy is rapidly increasing in response to a rapid change in social realities toward achieving carbon neutrality in these days. Thus, supply concerns and rising costs of Li have also become a problem, in addition to conventional rare elements such as Co and Ni.

In view of this, Japanese Patent Application Laid-Open No. 2023-48155 (Document 1) and Japanese Patent No. 7230772 (Document 2) disclose solid electrolytes serving as Na ion conductors. The solid electrolyte according to Document 1 contains a compound expressed by NaₓM¹_{2-(y+z)}M²_{y}M³_{z}(AO₄)₃, where M¹, M², and M³ are each independently Hf, Mg, Sc, In, Y, Ca, or Zr, and A is P, Si, S, or a combination of them. In the production of the solid electrolyte according to Document 2, an Na source, a Y source, and an Si source are mixed and fired to form a fired body of Na₅YSi₄O₁₂, which is then sintered after molding. Before sintering, Na₃YSi₃O₉ power is added.

In the production of the solid electrolytes according to Documents 1 and 2, high-temperature sintering (heat treatment) is necessary for densification and other purposes. In the production of batteries, when a solid electrolyte prior to sintering is mixed with a positive active material or a negative active material and then sintered, reactions between the solid electrolyte and the active material may cause high resistance. For this reason, there is demand for new Na-ion solid electrolytes that can be densified by processes such as press forming and have high ion conductivity.

### SUMMARY OF THE INVENTION

It is an object of the present invention to provide a solid electrolyte with high ion conductivity.

Aspect 1 of the present invention is a solid electrolyte that contains Na, Mα, Mβ, and F, where Mα is at least one element serving as a trivalent cation, and Mβ is at least one element serving as a quadrivalent or higher-valent cation.

According to the invention, it is possible to provide a solid electrolyte with high ion conductivity.

Aspect 2 of the present invention is the solid electrolyte according to Aspect 1, in which Mβ is an element serving as a quadrivalent cation, and the solid electrolyte contains a component expressed by a composition formula of Na₃₋ₓMα₁₋ₓMβₓF₆, where 0 < x < 1 is satisfied.

Aspect 3 of the present invention is the solid electrolyte according to Aspect 2, in which in the composition formula, 0.1 ≤ x ≤ 0.85 is satisfied.

Aspect 4 of the present invention is the solid electrolyte according to Aspect 1, in which the solid electrolyte contains a component expressed by a composition formula of Na_{3-x-2y-3z}Mα_{1-(x+y+z)}Mβ¹ₓMβ²_{y}Mβ³_{z}F₆, where Mβ¹ is an element serving as a quadrivalent cation, Mβ² is an element serving as a pentavalent cation, and Mβ³ is an element serving as a hexavalent cation, and 0 ≤ x < 1, 0 ≤ y < 1, 0 ≤ z < 1, and 0 < (x + y + z) < 1 are satisfied.

Aspect 5 of the present invention is the solid electrolyte according to Aspect 4, in which in the composition formula, 0.1 ≤ x ≤ 0.85 is satisfied.

Aspect 6 of the present invention is the solid electrolyte according to any one of Aspects 1 to 5, in which Mα includes Al or Ga.

Aspect 7 of the present invention is the solid electrolyte according to any one of Aspects 1 to 6, in which Mβ includes Si, P, or Ge.

Aspect 8 of the present invention is the solid electrolyte according to any one of Aspects 1 to 7, in which an X-ray diffraction pattern obtained by X-ray diffraction measurement using an CuKα ray has a peak in each of ranges of a diffraction angle 2θ from 18° to 21°, from 21° to 24°, from 31° to 34° , and from 45° to 48°.

Aspect 9 of the present invention is the solid electrolyte according to any one of Aspects 1 to 8, in which in an X-ray diffraction pattern obtained by X-ray diffraction measurement using a CuKα ray, a half-value width of a peak with a maximum intensity is greater than or equal to 0.4°.

Aspect 10 of the present invention is a method of producing a solid electrolyte. The method includes a) obtaining a mixture of Na₃MαF₆ and a substance that contains Na, Mβ, and F or a mixture of MαF₃, NaF, and a substance that contains Na, Mβ, and F, where Mα is at least one element serving as a trivalent cation, and Mβ is at least one element serving as a quadrivalent or higher-valent cation, and b) subjecting the mixture to a mechanical milling process.

Aspect 11 of the present invention is a battery that includes a positive electrode, a negative electrode, and an electrolyte layer provided between the positive electrode and the negative electrode. The solid electrolyte according to any one of Aspects 1 to 9 is contained in at least one of the positive electrode, the negative electrode, or the electrolyte layer.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a longitudinal section view showing an all-solid-state secondary battery.
Fig. 2 is a flowchart showing a procedure for producing a solid electrolyte.
Fig. 3 is a diagram showing an X-ray diffraction pattern obtained from the solid electrolyte.
Fig. 4 is a diagram showing the relationship between the ratio of the amount of substance of Na₂SiF₆ and ion conductivity at ambient temperature.
Fig. 5 is a diagram showing the relationship between the ratio of the amount of substance of Na₂SiF₆ and ion conductivity at 120°C.
Fig. 6 is a diagram showing the results of a charge and discharge test.
Fig. 7 is a diagram showing the results of potential window measurement.

### DESCRIPTION OF EMBODIMENTS

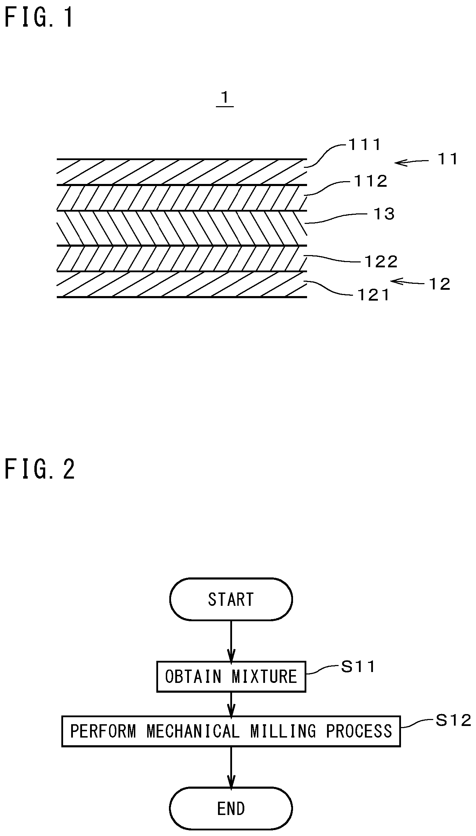

Fig. 1 is a longitudinal section view showing an all-solid-state sodium-ion secondary battery 1 (hereinafter, simply referred to as the "all-solid-state secondary battery 1"). The all-solid-state secondary battery 1 includes a positive electrode 11, an electrolyte layer 13, and a negative electrode 12 in order from above in Fig. 1. That is, the electrolyte layer 13 is positioned between the positive electrode 11 and the negative electrode 12. The electrolyte layer 13 is a solid electrolyte layer and serves also as a separator layer. The positive electrode 11 includes a current collector 111 and a positive electrode layer 112. The positive electrode layer 112 includes a positive active material. The negative electrode 12 includes a current collector 121 and a negative electrode layer 122. The negative electrode layer 122 includes a negative active material.

One example of the positive active material of the positive electrode layer 112 is Na(Fe, Mn)O₂. Other examples of the positive active material include layered compounds such as NaCoO₂, NaNiO₂, NaMnO₂, Na(Ni, Co, Mn)O₂, NaFeO₂, and Na(Ni, Mn, Fe, Ti)O₂, spinel-type compounds such as NaMn₂O₄, polyanion-type compounds such as Na₃V₂(PO₄)₃, Na₂Fe₂(SO₄)₃, Na₂Mn₂(SO₄)₃, NaFePO₄, NaMnPO₄, Na₄Fe₇(PO₄)₆, and Na₃V(PO₃)₃N, and pyrophosphate compounds such as Na₂MnP₂O₇ and Na₂FeP₂O₇. In addition to the positive active material, the positive electrode layer 112 includes a solid electrolyte, which will be described later. The positive electrode layer 112 may further include an electron conductive agent (e.g., carbon black). One example of the positive electrode layer 112 is obtained by integrating those substances by the application of pressure or other means.

One example of the negative active material of the negative electrode layer 122 is hard carbon. Other examples of the negative active material include metal such as Na, In, Sn, and Sb, alloys of the metal and Na, graphite, SiO, TiO₂, Fe₂O₃, Na_{4/3}Ti_{5/3}O₄, Na₂Ti₆O₁₃, Na_{0.66}[Li_{0.22}Ti_{0.78}]O₂, Na₃V₂(PO₄)₃, SnO, and Li₄Ti₅O₁₂. In addition to the negative active material, the negative electrode layer 122 includes a solid electrolyte, which will be described later. The negative electrode layer 122 may further include an electron conductive agent (e.g., carbon black). One example of the negative electrode layer 122 is obtained by integrating those substances by the application of pressure or other means.

The configurations and materials of the positive electrode 11 and the negative electrode 12 in the all-solid-state secondary battery 1 are not limited to those described above, and may be any of other various configurations and materials.

The electrolyte layer 13 is composed of or contains the solid electrolyte according to one embodiment of the present invention (hereinafter, also referred to as the "present solid electrolyte"). The solid electrolyte is a sodium (Na)-ion conductive material. The solid electrolyte contains a sodium element (Na), at least one element (Mα) serving as a trivalent cation, at least one element (Mβ) serving as a quadrivalent or higher-valent cation, and a fluorine element (F). The solid electrolyte may be composed of only Na, Mα, Mβ, and F. Mα is typically a metallic element. Mβ is a metallic element or a non-metallic element. In one example, the amount of substance of Na is greater than the amounts of substances of Mα and Mβ, and the amount of substance of F is greater than the amount of substance of Na. As will be described later, the solid electrolyte achieves high ion conductivity (typically, sodium-ion conductivity). The solid electrolyte is incombustible and chemically stable. The solid electrolyte is typically a non-sulfide-based electrolyte, and in one example, does not contain a sulfur element (S) (but may contain a sulfur element as unavoidable impurities).

In the case where Mβ is an element serving as a quadrivalent cation, the present solid electrolyte is obtained by, for example, mixing Na₃MαF₆ and Na₂MβF₆ (Na₂Mβ¹F₆ described later). Instead of Na₂MβF₆, a mixture of NaF and MβF₄ with a molar ratio of 2:1 may be used. In the case where Na₃MαF₆ and Na₂MβF₆ are mixed in the ratio of the amounts of substances of (1-x):x, where 0 < x < 1, the present solid electrolyte is expressed by a composition formula of Na₃₋ₓMα₁₋ₓMβₓF₆. With consideration given to factors such as measurement errors, a component that contains Na, Mα, Mβ, and F whose amounts of substances are in the ratio of a:b:c:d (i.e., NaₐMα_{b}Mβ_{c}F_{d}), where 0.9(3 - x) ≤ a ≤ 1.1(3 - x), 0.9(1 - x) ≤ b ≤ 1.1(1 - x), 0.9x ≤ c ≤ 1.1x, and 5.4 ≤ d ≤ 6.6 are satisfied, can be regarded as a component expressed by the above-described composition formula. Since 0 < x < 1, the above-described conditions for a to d are equivalent to 1.8 < a < 3.3, 0 < b < 1.1, 0 < c < 1.1, and 5.4 ≤ d ≤ 6.6. In the above-described composition formula, it is preferable that 0.1 ≤ x ≤ 0.85 is satisfied, and it is more preferable that 0.2 ≤ x ≤ 0.6 is satisfied. This further improves ion conductivity. Depending on the method of producing a solid electrolyte or the like, a, b, c, and d may fall outside the above-described range. Depending on the ion conductivity or the like required for the solid electrolyte, x may be less than 0.1, or may be grater than 0.85.

The element Mα serving as a trivalent cation is contained in group 13 elements of the periodic table (e.g., Al and Ga), group 3 elements (e.g., Sc), transition metal elements (e.g., Fe and Mn), and rare earth elements (e.g., Y and Ho), and Mα preferably contains an aluminum element (Al) or a gallium element (Ga). Mα may contains both Al and Ga. One example of Na₃MαF₆ described above is Na₃AlF₆ or Na₃GaF₆. In the case where Mβ is an element serving as a quadrivalent cation, Mβ is contained in group 4 elements (e.g., Zr) and group 14 elements (e.g., Si and Ge), and Mβ preferably contains a silicon element (Si) or a germanium element (Ge). Mβ may contain both Si and Ge. One example of Na₂MβF₆ described above is Na₂SiF₆ or Na₂GeF₆. For example, a solid electrolyte that contains Na₃AlF₆ and Na₂SiF₆ has higher ion conductivity than Na₃AlF₆ as a simple substance. The reason for this is not necessarily clear, but one conceivable reason is that a mechanical milling process described later causes Al and Si to mix within a crystal structure that contains Na (e.g., Si⁴⁺ is solid-solved in Al³⁺), resulting in Na deficiency. The same also applies to cases where Na₃MαF₆ is a compound other than Na₃AlF₆ (e.g., Na₃GaF₆), where Na₂MβF₆ is a compound other than Na₂SiF₆ (e.g., Na₂GeF₆), and where Mβ is an element serving as a cation other than a quadrivalent cation (e.g., a pentavalent cation or a hexavalent cation).

As described previously, Mβ is one or a plurality of elements serving as a quadrivalent or higher-valent cation, and for example, may contain an element serving as a pentavalent cation or an element serving as a hexavalent cation. In the case where Mβ¹ is an element serving as a quadrivalent cation, Mβ² is an element serving as a pentavalent cation, and Mβ³ is an element serving as a hexavalent cation, the composition formula of the solid electrolyte is expressed as Na_{3-x-2y-3z}Mα_{1-(x+y+z)}Mβ¹ₓMβ²_{y}Mβ³_{z}F₆. In the above-described composition formula, 0 ≤ x < 1, 0 ≤ y < 1, 0 ≤ z < 1, and 0 < (x + y + z) < 1 are satisfied. With consideration given to factors such as measurement errors, a component that contains Na, Mα, Mβ¹, Mβ², Mβ³, and F whose amounts of substances are in the ratio of a:b:c1:c2:c3:d (i.e., NaₐMα_{b}Mβ¹_{c1}Mβ²_{c2}Mβ³_{c3}F_{d}), where 0.9(3 - x - 2y - 3z) ≤ a ≤ 1.1(3 - x - 2y - 3z), 0.9(1-(x + y + z)) ≤ b ≤ 1.1(1 - (x + y + z)), 0.9x ≤ c1 ≤ 1.1x, 0.9y ≤ c2 ≤ 1.1y, 0.9z ≤ c3 ≤ 1.1z, and 5.4 ≤ d ≤ 6.6 are satisfied, can be regarded as a component expressed by the above-described composition formula. In the above-described composition formula, 0.1 ≤ x ≤ 0.85 may be satisfied. Examples of the element Mβ² serving as a pentavalent cation include a phosphorus element (P), a vanadium element (V), a niobium element (Nb), a tantalum element (Ta), and an antimony element (Sb). Examples of the element Mβ³ serving as a hexavalent cation include a molybdenum element (Mo) and a tungsten element (W). Depending on the method of producing a solid electrolyte or the like, the present solid electrolyte may also be expressed by a composition formula other than the above-described composition formula.

As will be described later, it is preferable that an X-ray diffraction pattern obtained by X-ray diffraction measurement of the present solid electrolyte using CuKα rays has a peak in each of ranges of a diffraction angle 2θ from 18° to 21°, from 21° to 24°, from 31° to 34°, and from 45° to 48°. It is also preferable that the half-value width of a peak with a maximum intensity in the X-ray diffraction pattern is greater than or equal to 0.4°. Such a solid electrolyte has appropriately low crystallinity and achieves high ion conductivity. Note that the present solid electrolyte may be amorphized.

Fig. 2 is a flowchart showing a procedure for producing the present solid electrolyte. The following description is given of processing for producing the present solid electrolyte by mixing Na₃AlF₆ as Na₃MαF₆ and Na₂SiF₆ as Na₂Mβ¹F₆. First, Na₃AlF₆ powder is prepared. In the preparation of the Na₃AlF₆ powder, for example, commercial NaF (sodium fluoride) powder and commercial AlF₃ (aluminum fluoride) powder are weighed and mixed in the ratio of 3:1 (the ratio of the amounts of substances). Then, a resultant mixture is subjected to heat treatment (e.g., at 1050°C) and thereafter pulverized into Na₃AlF₆ powder. The Na₃AlF₆ powder may be generated by any other method.

Moreover, Na₂SiF₆ powder is prepared. The Na₂SiF₆ powder is commercially available. Of course, the Na₂SiF₆ powder may be generated by any known method. Then, the Na₃AlF₆ powder and the Na₂SiF₆ powder are mixed to obtain a mixture (step S11). In the mixture, the ratio of the amount of substance of Na₂SiF₆ to a total of the amount of substance of Na₃AlF₆ and the amount of substance of Na₂SiF₆ is higher than 0% and lower than 100%. This ratio is preferably higher than or equal to 10% and lower than or equal to 85%, and more preferably higher than or equal to 20% and lower than or equal to 60%.

Then, the mixture is subjected to a mechanical milling process (step S12). In one example of the mechanical milling process, a planetary ball mill is used. The planetary ball mill is capable of generating very high impact energy because a stage with a pot placed thereon revolves while the pot rotates on its axis. The mechanical milling process may be conducted using any other type of pulverizer. Through the mechanical milling process described above, powder of the present solid electrolyte is obtained for use in the positive electrode layer 112, the negative electrode layer 122, or the electrolyte layer 13. In the present processing example, the mechanical milling process is conducted at ordinary temperatures, but conditions for the mechanical milling process such as temperature may be changed as appropriate.

As described previously, Mβ may contain an element serving as a pentavalent cation or an element serving as a hexavalent cation. In the production of the present solid electrolyte, a substance such as a compound that is composed of Na, Mβ², and F (e.g., NaPF₆), a mixture that contains Na, Mβ², and F (e.g., a mixture of NaF and NbF₅), or a mixture that contains Na, Mβ³, and F (e.g., a mixture of NaF and MoF₆) may be used, instead of or together with a compound that is composed of Na, Mβ¹, and F (e.g., Na₂Mβ¹F₆; in the above-described example, Na₂SiF₆). In this way, a substance that contains Na, Mβ, and F (typically, a substance composed of Na, Mβ, and F) is usable. This substance is a compound that is composed of Na, Mβ, and F and/or a mixture that contains Na, Mβ, and F (typically, a mixture that is composed of Na, Mβ, and F). In step S11, a mixture of Na₃MαF₆ (in the above-described example, Na₃AlF₆) and a substance that contains Na, Mβ, and F is obtained, and then in step S12, the mixture is subjected to a mechanical milling process. This produces the present solid electrolyte.

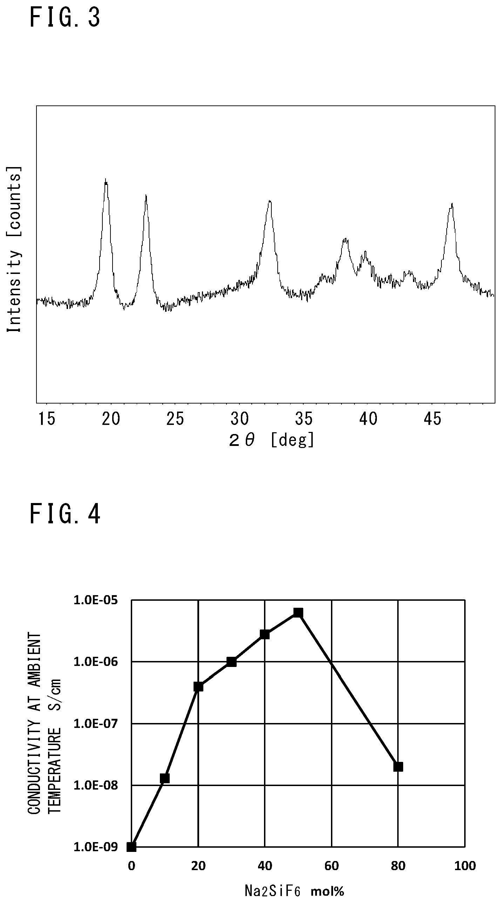

Fig. 3 is a diagram showing an X-ray diffraction (XRD) pattern obtained by measurement of the present solid electrolyte using powder X-ray diffractometry, and shows the X-ray diffraction pattern of a solid electrolyte obtained by setting the ratio of the amount of substance of Na₂SiF₆ to 50% (Experiment 6 described later). In this measurement, CuKα rays are used as a radiation source of an X-ray diffractometer. As shown in Fig. 3, the X-ray diffraction pattern of the solid electrolyte produced by the mechanical milling process has a relatively broad peak in each of the ranges of the diffraction angle 2θ from 18° to 21°, from 21° to 24°, from 31° to 34°, and from 45° to 48°. It is conceivable from Fig. 3 that remarkably high impact energy produced by the mechanical milling process causes pulverization or partial amorphization of Na₃AlF₆ and Na₂SiF₆ particles, and additionally the crystal structure is disordered due to distortion or dislocations within crystals. Since such phenomena remarkably occur in particular at the interfaces of these particles, the ion conductivity of the present solid electrolyte is considered to increase. Therefore, the present solid electrolyte may be further or completely amorphized. In order to more reliably improve the ion conductivity of the present solid electrolyte, the half-value width of a peak with a maximum intensity (e.g., a peak within the range of 18° to 21°) in the X-ray diffraction pattern is preferably greater than or equal to 0.4° and more preferably greater than or equal to 0.5°. In the X-ray diffraction pattern shown in Fig. 3, the half-value width of the peak with a maximum intensity is 0.66°. There are no particular limitations on the upper limit for the half-value width, and the upper limit may, for example, be 3.0°. Note that the half-value width of a peak is obtained by subjecting the X-ray diffraction pattern to automatic fitting using XRD data analysis software JADE.

Next, Experiments 1 to 10 of the solid electrolyte are described. Experiments 2 to 10 are examples according to the present invention, and Experiment 1 is a comparative example. The following experiments were conducted in a dry room or in a glove box with a dew point of less than or equal to -40°C.

### Experiment 1

Commercial NaF powder and commercial AlF₃ powder were prepared as raw materials. These raw materials were weighed and mixed so that the ratio of NaF and AlF₃ (the ratio of the amounts of substance) became 3:1. A resultant mixture was subjected to heat treatment at 1050°C and thereafter pulverized in a mortar into Na₃AlF₆ powder. The Na₃AlF₆ powder was subjected to a mechanical milling process using a planetary ball mill to obtain solid electrolyte powder that contains only the Na₃AlF₆ powder.

### Experiment 2

In addition to the Na₃AlF₆ powder described above, commercial Na₂SiF₆ powder was prepared. These materials were weighed and mixed so that the ratio of Na₃AlF₆ and Na₂SiF₆ (the ratio of the amounts of substance) became 90:10, and were subjected to a mechanical milling process using a planetary ball mill to obtain Na₃AlF₆-Na₂SiF₆ powder as solid electrolyte powder. As described previously, in the case where Na₃MαF₆ and Na₂MβF₆ were mixed in the ratio of the amounts of substances of (1 - x):x, where 0 < x < 1, the composition formula was expressed as Na₃₋ₓMα₁₋ₓMβₓF₆. In the present example in which Mα and Mβ were Al and Si, respectively, and x was equal to 0.1, the solid electrolyte powder was expressed by a composition formula of Na_{2.9}Al_{0.9}Si_{0.1}F₆.

### Experiment 3

Solid electrolyte powder expressed by a composition formula of Na_{2.8}Al_{0.8}Si_{0.2}F₆ was obtained through the same processing as in Experiment 2, except that Na₃AlF₆ and Na₂SiF₆ were weighed in the ratio of 80:20 (the ratio of the amounts of substances).

### Experiment 4

Solid electrolyte powder expressed by a composition formula of Na_{2.7}Al_{0.7}Si_{0.3}F₆ was obtained through the same processing as in Experiment 2, except that Na₃AlF₆ and Na₂SiF₆ were weighed in the ratio of 70:30 (the ratio of the amounts of substance).

### Experiment 5

Solid electrolyte powder expressed by a composition formula of Na_{2.6}Al_{0.6}Si_{0.4}F₆ was obtained through the same processing as in Experiment 2, except that Na₃AlF₆ and Na₂SiF₆ were weighed in the ratio of 60:40 (the ratio of the amounts of substances).

### Experiment 6

Solid electrolyte powder expressed by a composition formula of Na_{2.5}Al_{0.5}Si_{0.5}F₆ was obtained through the same processing as in Experiment 2, except that Na₃AlF₆ and Na₂SiF₆ were weighed in the ratio of 50:50 (the ratio of the amounts of substances).

### Experiment 7

Solid electrolyte powder expressed by a composition formula of Na_{2.2}Al_{0.2}Si_{0.8}F₆ was obtained through the same processing as in Experiment 2, except that Na₃AlF₆ and Na₂SiF₆ were weighed in the ratio of 20:80 (the ratio of the amounts of substances).

### Experiment 8

Commercial NaF powder and commercial GaF₃ (gallium fluoride) powder were prepared as raw materials. These raw materials were weighed and mixed so that the ratio of NaF and GaF₃ (the ratio of the amounts of substances) became 3:1. A resultant mixture was subjected to heat treatment at 1050°C and thereafter pulverized in a mortar into Na₃GaF₆ powder. Then, Na₃GaF₆ and Na₂SiF₆ were weighed in the ratio of 50:50 (the ratio of the amounts of substances) and subjected to a mechanical milling process using a planetary ball mill so as to obtain solid electrolyte powder expressed by a composition formula of Na_{2.5}Ga_{0.5}Si_{0.5}F₆.

### Experiment 9

In addition to the Na₃AlF₆ powder described above, commercial NaPF₆ powder was prepared. Na₃AlF₆ and NaPF₆ were weighed and mixed in the ratio of 67:33 (the ratio of the amounts of substance) and subjected to a mechanical milling process using a planetary ball mill so as to obtain Na₃AlF₆-NaPF₆ powder as solid electrolyte powder. This solid electrolyte powder was expressed by a composition formula of Na_{2.34}Al_{0.67}P_{0.33}F₆.

### Experiment 10

Na₃AlF₆, NaPF₆, and Na₂SiF₆ were weighed and mixed in the ratio of 10:80:10 (the ratio of the amounts of substances) and subjected to a mechanical milling process using a planetary ball mill so as to obtain Na₃AlF₆-NaPF₆-Na₂SiF₆ powder as solid electrolyte powder. This solid electrolyte powder was expressed by a composition formula of Na_{1.3}Al_{0.1}Si_{0.1}P_{0.8}F₆.

### Measurement of Ion Conductivity

The solid electrolyte powder was introduced into a mold configured by a sleeve made of resin and upper and lower punches made of stainless steel (SUS), and was subjected to uniaxial press molding by the application of pressure at 150 MPa. The upper and lower punches were connected to conductors, and ion conductivity was calculated by conducting impedance measurement at a temperature ranging from ambient temperature to 120°C.

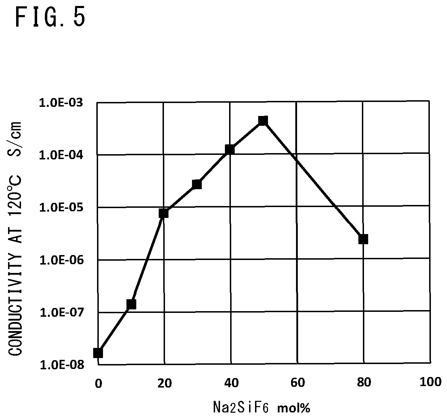

Table 1 shows the ratio of the amount of substance of either Na₃AlF₆ or Na₃GaF₆, and the amount of substance of Na₂SiF₆ and/or NaPF₆, ion conductivity at ambient temperature, and ion conductivity at 120°C in the solid electrolyte powder according to Experiments 1 to 10. This table also shows the half-value width of each peak calculated by a technique described previously in the X-ray diffraction pattern obtained from the solid electrolyte powder according to some of the experiments. Figs. 4 and 5 are diagrams showing the relationship between the ion conductivity and the ratio (mol%) of the amount of substance of Na₂SiF₆ in the total of the amount of substance of Na₃AlF₆ and the amount of substance of Na₂SiF₆. Fig. 4 shows the ion conductivity at ambient temperature, and Fig. 5 shows the ion conductivity at 120°C.

**Table 1**

| Experiment No. | Base Material | | Additive | | Additive 2 | | Ion Conductivity @Ambient Temperature | Ion Conductivity @ 120°C | Half-Value Width | | | |
|---|---|---|---|---|---|---|---|---|---|---|---|---|
| | Compound | Blended Amount | Compound | Blended Amount | Compound | Blended Amount | | | 18°-21° | 21°-24° | 31°-34° | 45°-48° |
| - | - | mol% | - | mol% | - | **mol%** | S/cm | S/cm | deg. | deg. | deg. | deg. |
| 1 | Na₃AlF₆ | 100 | None | 0 | None | 0 | 1.0E-09 | 1.7E-08 | --- | --- | --- | --- |
| 2 | Na₃AlF₆ | 90 | Na₂SiF₆ | 10 | None | 0 | 1.3E-08 | 1.4E-07 | --- | --- | --- | --- |
| 3 | Na₃AlF₆ | 80 | Na₂SiF₆ | 20 | None | 0 | 4.0E-07 | 7.6E-06 | 0.797 | 0.543 | 0.866 | 0.786 |
| 4 | Na₃AlF₆ | 70 | Na₂SiF₆ | 30 | None | 0 | 9.9E-07 | 2.7E-05 | --- | --- | --- | --- |
| 5 | Na₃AlF₆ | 60 | Na₂SiF₆ | 40 | None | 0 | 2.8E-06 | 1.2E-04 | --- | --- | --- | --- |
| 6 | Na₃AlF₆ | 50 | Na₂SiF₆ | 50 | None | 0 | 6.2E-06 | 4.3E-04 | 0.655 | 0.576 | 0.865 | 0.806 |
| 7 | Na₃AlF₆ | 20 | Na₂SiF₆ | 80 | None | 0 | 2.0E-08 | 2.3E-06 | --- | --- | --- | --- |
| 8 | Na₃GaF₆ | 50 | Na₂SiF₆ | 50 | None | 0 | 6.0E-06 | 2.7E-04 | --- | --- | --- | --- |
| 9 | Na₃AlF₆ | 67 | NaPF₆ | 33 | None | 0 | 3.0E-06 | 5.0E-04 | --- | --- | --- | --- |
| 10 | Na₃AlF₆ | 10 | NaPF₆ | 80 | Na₂SiF₆ | 10 | 2.0E-05 | 8.1E-04 | --- | --- | --- | --- |

The solid electrolyte powder according to Experiments 2 to 8 which contained Na₂SiF₆ had higher ion conductivity at both ambient temperature and 120°C than the solid electrolyte powder according to Experiment 1 which did not contain Na₂SiF₆. Focusing on Experiments 1 to 7 in which Na₃AlF₆ was contained, the ion conductivity at both ambient temperature and 120°C increased with an increase in the ratio of the amount of substance of Na₂SiF₆ from 0% to 50% as shown in Figs. 4 and 5. As the ratio of Na₂SiF₆ increased further, the ion conductivity decreased. Even in Experiment 7 in which the ratio of Na₂SiF₆ was 80%, the ion conductivity was sufficiently higher than the ion conductivity of the solid electrolyte powder according to Experiment 1. Therefore, it is conceivable that, if the ratio of Na₂SiF₆ is higher than 0% and lower than 100% (i.e., 0 < x < 1 is satisfied), it is possible to ensure higher ion conductivity than the ion conductivity of the solid electrolyte powder according to Experiment 1.

Considering the results of Experiment 2 in which the ratio of the amount of substance of Na₂SiF₆ was 10% and Experiment 7 in which the ratio of the amount of substance of Na₂SiF₆ was 80%, it is conceivable that the ion conductivity is sufficiently high if the ratio of Na₂SiF₆ is higher than or equal to 10% and lower than or equal to 85% (0.1 ≤ x ≤ 0.85). The ratio of Na₂SiF₆ is more preferably higher than or equal to 20% and lower than or equal to 60% (0.2 ≤ x ≤ 0.6). This makes it possible to more reliably realize sufficiently high ion conductivity. The solid electrolyte powder according to Experiments 9 and 10 which contained NaPF₆ also had higher ion conductivity at both ambient temperature and 120°C than the solid electrolyte powder according to Experiment 1. In the solid electrolyte powder according to Experiments 3 and 6 which had undergone X-ray diffraction measurement, the X-ray diffraction patterns had a peak in each of the ranges of the diffraction angle 2θ from 18° to 21°, from 21° to 24°, from 31° to 34°, and from 45° to 48°. The half-value widths of the peaks with maximum intensities were greater than or equal to 0.4°.

### Preparation 1 of All-Solid-State Battery

Positive active material powder that was Na(Fe, Mn)O₂, solid electrolyte powder, and electron conductive agent powder were weighed and mixed to obtain blended powder of the positive electrode. Also, negative active material powder that was hard carbon, solid electrolyte powder, and electron conductive agent powder were weighed and mixed to obtain blended powder of the negative electrode. The solid electrolyte powder was introduced into a mold configured by a sleeve made of PEEK resin and upper and lower punches made of SUS, and was subjected to uniaxial press molding by the application of pressure at 150 MPa. The blended powder of the positive electrode was introduced on the pressed solid electrolyte powder and integrated together by the application of pressure at 150 MPa. The blended powder of the negative electrode was introduced on the opposite side of the pressed solid electrolyte powder to the positive electrode and integrated together by the application of pressure at 150 MPa. In this way, a battery configured by a positive electrode layer, a solid electrolyte layer, and a negative electrode layer was prepared.

### Charge/Discharge Test 1

After conductors were connected to the upper and lower punches, the battery described above was placed stationary in a constant-temperature bath kept at 120°C in order to conduct a cc-cv (constant current-constant voltage) charge/discharge test. In the charge/discharge test, the cc current density was set to 300 µA/cm², the cv current density was set to 30 µA/cm², and the cut-off voltage was set in the range of 4.25V to 1.50V. In a battery using the solid electrolyte powder according to Experiment 1 (comparative example), the discharge capacity per positive active material was 0 mAh/g. That is, resistance was too high for charging and discharging. In a battery using the solid electrolyte powder according to Experiment 6 (example), the discharge capacity per positive active material was 31 mAh/g.

### Preparation 2 of All-Solid-State Battery

The solid electrolyte powder according to Experiment 6, positive active material powder that was commercial NaCrO₂ powder, and electron conductive agent powder that was commercial acetylene black were weighed and mixed in a weight ratio of 50:50:3 to obtain blended powder of the positive electrode. Then, 100 mg of the solid electrolyte powder was introduced into a mold of PEEK resin with an inside diameter φ of 10 mm, and was subjected to press forming. One of the punches was pulled out of the mold, and 3.3 mg of the blended powder of the positive electrode was introduced into the mold and subjected to press forming. The other punch was also pulled out of the mold to place Na metal foil, and then returned and secured with screws, thereby configuring a battery.

### Charge/Discharge Test 2

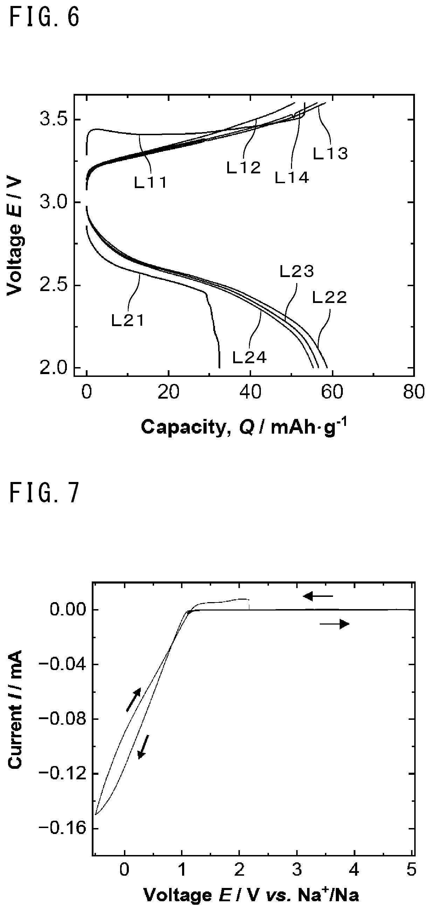

The above-described battery was placed in a constant-temperature bath kept at 60°C, and a cc charge/discharge test was conducted with 50 µA. The charge cut-off voltage was set to 3.6V, and the discharge cut-off voltage was set to 2.0V. Fig. 6 is a diagram showing the results of the charge/discharge test. In Fig. 6, the vertical axis indicates the voltage, and the horizontal axis indicates the capacity density. The first to fourth charging curves are assigned reference signs L11, L12, L13, and L14, respectively, and the first to fourth discharging curves are assigned reference signs L21, L22, L23, and L24, respectively. It was confirmed, as shown in Fig. 6, that the above-described battery was capable of stably repeating multiple charge-discharge cycles, and the present solid electrolyte functioned as an Na solid electrolyte.

### Potential Window Measurement

Here, 100 mg of the solid electrolyte powder according to Experiment 6 was introduced into a mold made of PEEK resin with an inside diameter φ of 10 mm and subjected to press forming. One of the punches was pulled out of the mold to place Na metal foil, and then returned and secured with screws, thereby forming a cell for measurement. In the measurement of a potential window, this cell was placed in a constant-temperature bath kept at 60°C, and voltage sweeping was conducted at 10 mV/sec in the range of -0.5V to 5V (vsNa⁺/Na) to acquire cyclic voltammetry. Fig. 7 is a diagram showing the results of the potential window measurement. In Fig. 7, the vertical axis indicates the current, and the horizontal axis indicates the voltage. As a result of the potential window measurement, it was confirmed that no current flowed until 5V (the solid electrolyte was not electrolyzed) and the present solid electrolyte possessed high electrochemical stability (oxidation resistance).

Although in step S11 shown in Fig. 2, Na₃AlF₆ produced from NaF and AlF₃ is mixed with Na₂SiF₆, NaF and AlF₃ may be directly mixed with Na₂SiF₆ without producing Na₃AlF₆. At this time, the ratio of the amounts of substances of NaF and AlF₃ may be other than 3:1. In the case as well where NaF, AlF₃, and Na₂SiF₆ are mixed, the mechanical milling process of the mixture in step S12 enables producing a solid electrolyte with high ion conductivity. In step S11, Na₃MαF₆ other than Na₃AlF₆ may be used, where Mα is an element serving as a trivalent cation, and Na₂Mβ¹F₆ other than Na₂SiF₆ may be used, where Mβ¹ is an element serving as a quadrivalent cation. Examples of Na₃MαF₆ other than Na₃AlF₆ include Na₃GaF₆, Na₃CrF₆, and Na₃LaF₆. Examples of Na₂Mβ¹F₆ other than Na₂SiF₆ include Na₂GeF₆, Na₂TiF₆, and Na₂ZrF₆. As described previously, a substance such as a compound composed of Na, Mβ², and F (e.g., NaPF₆ or NaVF₆) or a mixture composed of Na, Mβ³, and F (e.g., a mixture of NaF and either MoF₆ or WF₆) may be used instead of or together with Na₂Mβ¹F₆, where Mβ² is an element serving as a pentavalent cation and Mβ³ is an element serving as a hexavalent cation. Moreover, NaF and MαF₃ other than AlF₃ may be directly mixed with Na₂MβF₆. Examples of MαF₃ other than AlF₃ include GaF₃, CrF₃, LaF₃, BiF₃, and YF₃.

As described above, the present solid electrolyte contains Na, Mα, Mβ, and F, where Mα is at least one element serving as a trivalent cation, and Mβ is at least one element serving as a quadrivalent or higher-valent cation. Accordingly, it is possible to provide the solid electrolyte with high ion conductivity. As a result, it is possible to realize an all-solid-state secondary battery with high output.

Among the solid electrolytes, like sulfide-based ones, materials that react with moisture and generate hydrogen sulfide gas are widely known. Meanwhile, oxide-based solid electrolytes that do not generate gas such as hydrogen sulfide are also being developed widely. However, such solid electrolytes have the problem of reacting with active materials and increasing in resistance during the production of batteries because high-temperature sintering is necessary for densification in order to improve ion conductivity. In contrast, the present solid electrolyte is incombustible and chemically stable, thereby making it possible to provide an intrinsically safe ion battery. Besides, the present solid electrolyte can be densified by the pressure of press forming, not sintering. This prevents the present solid electrolyte from reacting with active materials during the production of batteries. Moreover, the negative electrode capable of stable charging and discharging can be formed even by using the negative active material with a low operating potential, such as graphite. Since the present solid electrolyte uses an Na element that is low in cost and has no resource risks, it is possible to provide an all-solid-state secondary battery that is low in cost and that can be supplied in large quantities.

Preferably, Mβ is an element serving as a quadrivalent cation, and the present solid electrolyte contains a component expressed by a composition formula of NaₐMα_{b}Mβ_{c}F_{d}, where 0.9(3 - x) ≤ a ≤ 1.1(3 - x), 0.9(1 - x) ≤ b ≤ 1.1(1 - x), 0.9x ≤ c ≤ 1.1x, 5.4 ≤ d ≤ 6.6, and 0 < x < 1 are satisfied. This more reliably realizes high ion conductivity.

Preferably, the present solid electrolyte contains a component expressed by a composition formula of Na_{3-x-2y-3z}Mα_{1-(x+y+z)}Mβ¹ₓMβ²_{y}Mβ³_{z}F₆, where Mβ¹ is an element serving as a quadrivalent cation, Mβ² is an element serving as a pentavalent cation, and Mβ³ is an element serving as a hexavalent cation, and 0 ≤ x < 1, 0 ≤ y < 1, 0 ≤ z < 1, and 0 < (x + y + z) < 1 are satisfied. This more reliably realizes high ion conductivity.

To identify whether an unknown solid electrolyte is the present solid electrolyte, chemical analysis is conducted on the unknown solid electrolyte to identify whether the unknown solid electrolyte contains Na, Mα, Mβ, and F as its components. In the case of identifying whether an unknown solid electrolyte is expressed by the above-described composition formula, for example, Na, Al, Si, and P can be quantitated by an ICP-emission spectroscopic analyzer, and F can be quantitated by ion chromatography. In the case where the present solid electrolyte contains the element Mα that is other than Al, and the element Mβ that is other than Si and P, a measurement method capable of quantitating the elements Mα and Mβ is appropriately selected.

A preferable method of producing the present solid electrolyte includes the step of obtaining a mixture of Na₃MαF₆ and a substance that contains Na, Mβ, and F or a mixture of MαF₃, NaF, and a substance that contains Na, Mβ, and F, where Mα is at least one element serving as a trivalent cation and Mβ is at least one element serving as a quadrivalent or higher-valent cation (step S11), and the step of subjecting the mixture to a mechanical milling process (step S12). Accordingly, it is possible to easily provide the solid electrolyte with high ion conductivity. In the case where Mβ is an element serving as a quadrivalent cation, a preferable production method includes the step of obtaining a mixture of Na₃MαF₆ and Na₂MβF₆ or a mixture of MαF₃, NaF, and Na₂MβF₆ (step S11), and the step of subjecting the mixture to a mechanical milling process (step S12). This method more reliably provides the solid electrolyte with high ion conductivity.

The present solid electrolyte, the method of producing the present solid electrolyte, and the battery may be modified in various ways.

The X-ray diffraction pattern acquired from the present solid electrolyte may not have a peak in all or some of the ranges of the diffraction angle 2θ from 18° to 21°, from 21° to 24°, from 31° to 34°, and from 45° to 48°. Moreover, the half-value width of a peak with a maximum intensity in the X-ray diffraction pattern may be less than 0.4°.

The present solid electrolyte may be mixed with other substances (which may contain Na) and used as an electrolyte material. In this case, the present solid electrolyte preferably serves as a component with a highest mass ratio, i.e., a principal component, among the components contained in the electrolyte material. The mass ratio of the principal component in the electrolyte material is preferably higher than or equal to 50% by mass, more preferably higher than or equal to 60% by mass, and yet more preferably higher than or equal to 70% by mass.

The present solid electrolyte used in the all-solid-state secondary battery 1 does not necessarily have to be contained in all of the positive electrode 11, the negative electrode 12, and the electrolyte layer 13, and may be contained in at least one of the positive electrode 11, the negative electrode 12, or the electrolyte layer 13. The present solid electrolyte may be used in batteries other than all-solid-state secondary batteries, and may be used for purposes other than batteries. The production of the present solid electrolyte may be conducted by a process other than the mechanical milling process.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all-solid-state sodium-ion secondary battery
- 11: positive electrode
- 12: negative electrode
- 13: electrolyte layer
- S11, S12: step

## Claims

1. A solid electrolyte comprising:
Na, Mα, Mβ, and F, where Mα is at least one element serving as a trivalent cation, and Mβ is at least one element serving as a quadrivalent or higher-valent cation.

2. The solid electrolyte according to claim 1, wherein
Mβ is an element serving as a quadrivalent cation, and
said solid electrolyte contains a component expressed by a composition formula of Na₃₋ₓMα₁₋ₓMβₓF₆, where 0 < x < 1 is satisfied.

3. The solid electrolyte according to claim 2, wherein
in said composition formula, 0.1 ≤ x ≤ 0.85 is satisfied.

4. The solid electrolyte according to claim 1, wherein
said solid electrolyte contains a component expressed by a composition formula of Na_{3-x-2y-3z}Mα_{1-(x+y+z)}Mβ¹ₓMβ²_{y}Mβ³_{z}F₆, where Mβ¹ is an element serving as a quadrivalent cation, Mβ² is an element serving as a pentavalent cation, and Mβ³ is an element serving as a hexavalent cation, and
0 ≤ x < 1, 0 ≤ y < 1, 0 ≤ z < 1, and 0 < (x + y + z) < 1 are satisfied.

5. The solid electrolyte according to claim 4, wherein
in said composition formula, 0.1 ≤ x ≤ 0.85 is satisfied.

6. The solid electrolyte according to claim 1, wherein
Mα includes Al or Ga.

7. The solid electrolyte according to claim 1, wherein
Mβ includes Si, P, or Ge.

8. The solid electrolyte according to claim 1, wherein
an X-ray diffraction pattern obtained by X-ray diffraction measurement using an CuKα ray has a peak in each of ranges of a diffraction angle 2θ from 18° to 21°, from 21° to 24°, from 31° to 34°, and from 45° to 48°.

9. The solid electrolyte according to claim 1, wherein
in an X-ray diffraction pattern obtained by X-ray diffraction measurement using a CuKα ray, a half-value width of a peak with a maximum intensity is greater than or equal to 0.4°.

10. A method producing a solid electrolyte, comprising:
a) obtaining a mixture of Na₃MαF₆ and a substance that contains Na, Mβ, and F or a mixture of MαF₃, NaF, and a substance that contains Na, Mβ, and F, where Mα is at least one element serving as a trivalent cation, and Mβ is at least one element serving as a quadrivalent or higher-valent cation; and
b) subjecting said mixture to a mechanical milling process.

11. A battery comprising:
a positive electrode;
a negative electrode; and
an electrolyte layer provided between said positive electrode and said negative electrode,
wherein the solid electrolyte according to any one of claims 1 to 9 is contained in at least one of said positive electrode, said negative electrode, or said electrolyte layer.
